# EUROPEAN PATENT APPLICATION

(11) **EP 1 519 389 A1**
(43) Date of publication of application: **30.03.2005**
(21) Application number: 04255390.9
(22) Date of filing: 04.09.2004
(51) Int. Cl.: H01B 3/40, H01B 3/30, C09D 5/03, C09D 183/04

(54) **Electrically insulative powder coatings and compositions and methods for making them**

(30) Priority: 18.09.2003 US 504026
(71) Applicant: Rohm and Haas Company, Philadelphia, Pennsylvania 19106-2399 (US)
(72) Inventor: Cramer, Michele Le, Sinking Spring PA 19608 (US); Correll, Glen D, Birdsboro PA 19508 (US); Osenbach, Nancy L., New Ringgold PA 17960 (US)
(74) Representative: Kent, Venetia Katherine

(57) **Abstract**

The present invention provides powder compositions comprising from 20 to 90 phr of one or more than one silicone resin having a glass transition temperature (Tg) of at least 40°C, from 10 to 80 phr of one or more than one resin chosen from glycidyl functional acrylic resin, mixtures of aromatic epoxy resin or novolac resin with carboxyl functional acrylic resin carboxyl functional polyester resin or glycidyl functional acrylic resin, and one or more than one filler, such as wollastonite, barium sulfate, mica, talc, alumina, layered silicates like montmorillonite, and mixtures thereof. The one or more than one silicone resin may or may not be flaked and may or may not contain silanol groups. The compositions of the present invention provide single layer or multilayer powder coatings that are free of voids larger than 30 µm in diameter, and which may meet the UL Class H (180°C) certification for electrical insulation applications. Further, the compositions may be used to provide powder coatings, films, moldings, electrical potting compounds and electrical encapsulation compounds.

## Description

### FIELD OF THE INVENTION

The present invention relates to powders for making electrically insulative powder coatings, films and articles, to electrically insulative powder coatings, films and articles, and to methods of making electrically insulative powder coatings. More specifically, it relates to silicone resin containing powders, to powder coatings which meet or exceed a Class H (180°C) UL (Underwriter's Laboratories) rating for electrical insulation applications, and to methods for making such electrically insulative powder coatings.

### BACKGROUND OF THE INVENTION

Electrical insulation, under load, has a finite service life which is inversely proportional to the level of the electric field which acts upon the insulation. Service life can be considered to be characteristic of the type of insulation and may be many times greater for insulation formed by extrusion, i.e. in high-voltage cables, than for insulation formed from epoxy or casting resin insulations used in switchgear. However, the extrusion process used for the production of cable insulation is a continuous process which is particularly suitable for the production of quasi-infinite, geometrically simple structures. The extrusion process cannot be used to make insulation for complex and small structures, such as motor coils or connections in switchgear. In addition, the material used in extrusion, e.g. unfilled, pure polyethylene (PE), is unsuitable for many possible applications because PE insulations of this type can only be used up to approximately 90° C.

Powder coating provides a medium from which coatings may be formed without the risk posed by flammable solvents and without the expense of drying or devolatilizing the coatings. As taught in U.S. Patent Publication No. 2003/0113539, to Baumann et al., powder coating, unlike extrusion, may be suitable as an insulation process even for highly complex conductor structures. In particular, an insulation layer having a thickness of up to 10 mm was made by applying epoxy resin powder and heating to form a gel or intermediate cure layer a number of times in succession. However, the epoxy powder coatings used in the patent are rated for performance to Class B UL rating (up to 130°C), that is, above 130°C, epoxy coatings break down and the physical and electrical insulation properties are not maintained. Meanwhile, temperatures in use frequently surge to or remain at 200°C. Further, voids formed in the multiple layer coatings during their application, thereby giving the coatings an undesirably hazy appearance and resulting in discontinuities in insulative properties and in a diminished electrical service life.

There remains a need within the electrical insulation and power generation industries for powder coatings having an increased temperature resistance under electrical load to achieve more efficient electric power generation. Specifically, there remains a need for powder coatings and powder coated substrates that meet the UL Class H (180°C) certification (UL 1446- Systems of Insulating Materials - General). Further, there remains a need for electrically insulative, haze free insulative powder coatings that exhibit a low electric loss or Tan δ in use at temperatures as high as 205°C to provide a safety margin in use.

### SUMMARY OF THE INVENTION

According to the present invention, powder compositions comprise 20 phr or more or 30 phr or more or 40 phr or more, such as 90 phr or less, 80 phr or less, 70 phr or less or 60 phr or less, of one or more than one of silicone resin having a glass transition temperature (Tg) of at least 40°C, 10 phr or more, or 20 phr or more or 30 phr or more or 40 phr or more, such as to 80 phr or less, 70 phr or less, or 60 phr or less, of one or more than one resin chosen from carboxyl functional polyester mixed with aromatic epoxy resin, carboxyl functional acrylic resin mixed with aromatic epoxy resin, carboxyl functional polyester mixed with novolac resin, carboxyl functional acrylic resin mixed with novolac resin, glycidyl functional acrylic resin mixed with novolac resin, and glycidyl functional acrylic resin, and from 10 to 200 phr of one or more than one filler chosen from wollastonite, barium sulfate, mica, alumina, clays, such as layered silicates like montmorillonite, sodium metasilicate, magnesium metasilicate, talc, perlite, CaCO₃, glass frit, glass whiskers, or mixtures thereof. Further, the powder compositions may further comprise from 0.5 to 10 phr of one or more than one fine particle size filler chosen from ZnO, TiO₂, crystalline silica, amorphous precipitated silica, Al(OH)₃, zirconia, barium titanate, or mixtures thereof.

In general, the one or more than one silicone resin may be flaked, which increases its Tg. In addition, said one or more than one silicone resin may contain from 0.25 wt. % to 7.0 wt. % of silanol groups, based on the total weight of silicone resin. For example, each of said one or more than one silicone resin may contain silanol groups. Alternatively, a mixture of silicone resins in the powder composition may contain from 0.25 wt. % to 7.0 wt. % of silanol groups, based on the total weight of silicone resin. For example, the powder compositions may comprise a blend of equal weight parts of flaked methylphenyl silicone resins having 1.2 wt. % of silanol functionality and of phenyl silicones having 0.2 wt. % of silanol functionality.

The compositions may be used to provide powder coatings, films, moldings, electrical potting compounds and electrical encapsulation compounds. In addition, the compositions provide a powder coating or film comprising from one to ten coating layers, wherein each layer may be from 25 µm to 400 µm thick and the total coating thickness ranges from 25 µm to 3 mm. Different layers may comprise different powder coatings, for example, one or both of a conductive innermost and a conductive outermost layer may sandwich one or more than one electrically insulative layer.

### DETAILED DESCRIPTION OF THE INVENTION

The present invention provides powder compositions comprising one or more than one silicone resin having a glass transition temperature (Tg) of at least 40°C, one or more than one resin chosen from glycidyl functional acrylic resin, mixtures of aromatic epoxy resin or novolac resin with carboxyl functional acrylic resin carboxyl functional polyester resin or glycidyl functional acrylic resin, and one or more than one filler, such as wollastonite. The one or more than one silicone resin may or may not be flaked. The compositions of the present invention provide single layer or multilayer powder coatings that are free of voids larger than 30 pm in diameter, non-hazy and which, when cured exhibit an electrical loss of less than 15 %, or a tan δ of less than 0.15, at 200°C under an electric load of 1 kV/mm (1000 V/mm) of coating thickness at 50Hz. The one or more layer coatings may, for example, exhibit a tan δ of less than 0.10 at 200°C under an electric load of 1 kV/mm of coating thickness at 50Hz. Further, the compositions may be used to provide powder coatings, films, moldings, electrical potting compounds and electrical encapsulation compounds which may meet the UL Class H (180°C) certification.

In one embodiment, the present invention provides epoxy containing powder coatings that may crack to relieve stress in use, thereby increasing electrical permittivity and reducing tan δ or electrical loss tangent. In another embodiment, any epoxy resin containing powder coating according to the present invention may comprise adducts of epoxy and rubber or may contain epoxy and additionally contain adducts of epoxy and rubber.

Herein, unless otherwise indicated, percentages are by weight. Further, unless otherwise indicated, the total amount of resins and other components in the powder compositions of the present invention are expressed as weight parts relative to 100 parts by weight of the resin (phr).

All limitations and ranges recited herein are inclusive and combinable. Thus, if resin A is said to be useful in an amount of 20 phr or more, for example, 40 phr or more, or 50 phr or more, and, separately, resin A is said to be useful in the amount of less than 90 phr, for example, less than 80 phr, then resin A may, alternatively be used in amounts of from 20 to 80 phr, from 20 to 90 phr, from 40 to 80 phr, from 40 to 90 phr, from 50 to 80 phr, from 50 to 90 phr, from 20 to 40 phr, from 20 to 50 phr, from 80 to 90 phr, or in amounts of from 40 to 50 phr.

As used herein, the phrase "acid number" refers to the number of mg KOH required to neutralize the alkali-reactive groups in 1 g of polymer and has the units (mg KOH/g polymer). The acid number is determined according to ASTM standard test method D 1639-90.

As used herein, unless otherwise indicated, the phrase "acrylic" means acrylic, methacrylic, acrylate and methacrylate, and any mixture or combination thereof.

As used herein, the phrase "average particle size or diameter", refers to particle diameter as determined by laser light scattering using a Malvern Instruments, Malvern, PA, device located at the Rohm and Haas Powder Coatings Reading, PA Facility, Equipment Serial # 34315-33.

As used herein, the "glass transition temperature" or Tg of any polymer may be calculated as described by Fox in *Bull. Amer. Physics. Soc.,* 1, 3, page 123 (1956). The Tg can also be measured experimentally using differential scanning calorimetry (rate of heating 20°C. per minute, Tg taken at the midpoint of the inflection). Unless otherwise indicated, the stated Tg as used herein refers to the calculated Tg.

As used herein, the phrase "hydroxyl number" refers to the number of milligrams (mg) of KOH equivalent to the hydroxyl groups present in each gram (g) of polymer and has the units (mg KOH/g polymer).

As used herein, the phrase "(meth)acrylate" refers to either or both acrylate and methacrylate.

As used herein, unless otherwise indicated, the phrase "per hundred parts resin" or "phr" means the amount, by weight, of an ingredient per hundred weight parts of the total amount of resin or polymer contained in a coating powder, including cross-linking resins.

As used herein, unless otherwise indicated, the phrase "polymer" or "resin" includes, independently, monomers, oligomers, polymers, copolymers, terpolymers, block copolymers, segmented copolymers, prepolymers, graft copolymers, and any mixture or combination thereof.

As used herein, the phrase "wt. %" stands for weight percent.

Silicone resins may be combined with one or more than one resin chosen from epoxy resins, such as aromatic epoxy resins and bisphenol epoxy resins, like bisphenol A epoxy resins, carboxyl functional acrylic polymer, glycidyl functional acrylic polymer, phenolic resins, such as novolac and cresol novolac resins, carboxyl functional polyester resins and combinations thereof provide enhanced adhesion to substrates. Useful resin mixtures that may be combined with silicone resin may include mixtures of one or more than one phenolic or cresol novolac resin or aromatic epoxy resin, with one or more than one carboxyl functional polyester resin, carboxyl functional acrylic resin, or glycidyl functional acrylic resin. The amount of one or more than one resin mixed with one or more than one silicone resin may be 10 phr or more, 20 phr or more, 30 phr or more, or 40 phr or more, and should be 80 phr or less, or 70 phr or less, for example, 60 phr or less.

Carboxyl functional acrylic polymers may comprise copolymers of (meth)acrylic acid with alkyl esters of acrylic and methacrylic acid, wherein the alkyl group contains from 1 to 8 carbon atoms. Useful comonomers may include, styrene, ethylene, propylene, vinyl monomers, and difunctional and trifunctional (meth)acrylates. The acrylic polymers should have a Tg of 45°C or higher, for example, 50°C or higher, to prevent blocking and an acid number, absent functionalization or blocking, of 45 or higher, for example, 55 or higher, or 65 or higher to insure adequate curing. Acrylic polymers may have an acid number as high as 100 and should have an acid number low enough to enable them to soften at extrusion temperatures of 80°C or below, for example 70°c or below.

The acrylic resins of the present invention may comprise the reaction product of from 0.1 to 10 weight % of carboxylic acid functional comonomers, based on the weight of all monomers used to form the resin, and may comprise the reaction product of up to 10% by weight of other comonomers, based on the weight of all monomers used to form the resin. The remainder of the monomers used to the acrylic resins of the present invention should comprise alkyl (meth)acrylates. Exemplary alkyl (meth)acrylates may include methyl acrylate, methyl methacrylate, ethyl acrylate, acrylic acid, methacrylic acid, butyl acrylate, butyl methacrylate, etc. Styrene or alpha-methyl styrene comonomers may also be incorporated, particularly to increase glass transition temperature of the acrylic copolymer.

Glycidyl functional acrylic polymer may comprise copolymers of glycidyl (meth)acrylate or an oligomer thereof with the same 1 to 8 carbon alkyl esters of acrylic and methacrylic acid and, optionally, the same comonomers used to make carboxyl functional acrylic polymers. The glycidyl functional acrylic resins of the present invention may comprise the reaction product of 0.1 or more wt. %, for example, 1 wt. % or more, or 5 wt. % or more, or 10 wt. % or more, or 20 wt. % or more of glycidyl functional comonomers, based on the weight of all monomers used to form the resin, and may comprise the reaction product of up to 10% by weight of other comonomers, based on the weight of all monomers used to form the resin. The glycidyl functional acrylic resins of the present invention may comprise the reaction product of 70 wt. % or less, for example, 55 wt.% or less, or 40 wt. % or less of glycidyl functional comonomers. One suitable glycidyl functional acrylic copolymer comprises a random copolymer of methyl methacrylate, glycidyl acrylate, and styrene having a glycidyl equivalent weight of from 290 to 310.

Suitable epoxy resins may include any epoxy resin having a Tg of 35°C or more, or 40°C or more, such as aliphatic or aromatic epoxy resins, including the reaction products of halohydrins and aliphatic glycols, diphenols or polyphenols. Aromatic epoxy resins have higher Tg's than aliphatic epoxy resins. Aromatic epoxy resins made from bisphenols and polyphenolic diols or polyphenols may enhance heat resistance in cured products. Exemplary epoxy resins may include bisphenol A epoxy resins and polyphenylether diol epoxy resins. Such resins may be have a melt viscosity of from 300 to 4000 centipoises at 150°C and may have an epoxide equivalent weight (eew) of from 300 to 1500. An adduct of rubber and epoxy, such as the reaction product of a bisphenol epoxy resin and butadiene or butadiene-acrylonitrile rubber, may also be used.

Suitable polyesters may comprise carboxylic acid functional or hydroxyl functional polyesters, the weight average molecular weight (Mw) of which ranges from 1,000 to 40,000, for example, from 2,000 to 7,000, or from 2,500 to 5,000. The Tg of the polyester resins of the present invention may be higher than 50°C, preferably higher than 55°C so as to prevent blocking in a powder composition containing the polyester resin.

Carboxylic acid numbers in carboxyl polyesters may range from 30 to 85, for example, from 30 to 60, or from 30 to 40. Such polyesters may have acid functionalities of at least 2, up to 3.5, but preferably in the range of between about 2.1 and about 2.5. Likewise, the hydroxyl number of a hydroxyl functional polyester may range from 20 to 80, for example, 30-70, or 45-60. The hydroxyl functionality of such resin, i.e. the average number of hydroxyl groups present in each molecule of the resin, may be 2 or more, for example, 2.2 or more, or 3.5 or more. The upper limit of hydroxyl functionality, a molecular function, should correspond to the upper limit of hydroxyl number, a molecular weight function.

Polyester resins according to the present invention may be made from aromatic and/or saturated aliphatic acids and polyols by methods which are conventional in the art. During polymerization, the reactants may be heated to a temperature in the range of from about 135°C to 220°C (about 275°F to 430°F.) while being sparged with a stream of inert gas such as nitrogen to remove water as it forms. Vacuum or an azeotrope-forming solvent may be used at the appropriate temperature to assist the removal of water.

Polyesters may be formed in conventional manner from carboxylic acids (or their anhydrides) having acid functionalities of 2 or greater and polyols having hydroxyl functionality of 2 or greater. Examples of suitable multi-functional carboxylic acids include benzene-1,2,4-tricarboxylic acid, phthalic acid, tetrahydrophthalic acid, hexahydrophthalic acid, endobicyclo-2,2,1-5-heptyne-2,3-dicarboxylic acid, tetrachlorophthalic acid, cyclohexanedioic acid, isophthalic acid, terephthalic acid, trimesic acid, 3,6-dichlorophthalic acid, tetrachlorophthalic acid, benzophenone dicarboxylic acid, diphenic acid, 4,4-dicarboxydiphenyl ether, 2,5-pyridine dicarboxylic acid, trimellitic acid, azelaic acid, maleic acid, succinic acid, adipic acid, sebacic acid, glutaric acid, pimelic acid, suberic acid, azelaic acid, diglycolic acid, 1,12-dodecanoic acid, tetrapropenyl succinic acid, maleic acid, fumaric acid, itaconic acid, malic acid, and like carboxylic acids. Examples of suitable multi-functional alcohols include glycerin, trimethylolpropane, trimethylolethane, trishydroxyethylisocyanurate, pentaerythritol, ethylene glycol, diethylene glycol, propylene glycol, trimethylene glycol, neopentyl glycol, 1,3-, 1,2- and 1,4-butanediols, heptanediol, hexanediol, octanediol, 2,2-'bis (4- cyclohexanol) propane, neopentyl glycol, 2,2,3-trimethylpentane-1,3-diol, 1,4-dimethylolcyclohexane, 2,2,4-trimethylpentane diol, etc. To obtain carboxyl-functional polyesters of desired molecular weight, the monomer mixture used to form the polyester has an appropriate excess of carboxyl functionality to hydroxyl functionality. To obtain hydroxyl-functional polyesters of desired molecular weight, the monomer mixture used to form the polyester has an appropriate excess of hydroxyl functionality to carboxyl functionality.

Exemplary polyester resins may comprise the polymerization reaction product of dicarboxylic acids, glycols and monomers of functionality of three or higher, such that the dicarboxylic acids comprise at least 75 mole % of isophthalic acid and at least 5 mole % of 1,4-cyclohexane dicarboxylic acid, for example, from 75 to 90 mole % of isophthalic acid and from 10 to 25 mole % of 1,4- cyclohexane dicarboxylic acid.

Commercially available hydroxyl functional polyesters useful in the composition of the present invention may comprise Crylcoat® 820, from UCB, Smyrna, GA, Alftalat® AN 745, from Solutia, St. Louis, Missouri, Rucote® 625, from Bayer; Hicksville, NY, Uralac® P6505, from DSM; Elmwood Park, NJ, Sparkle@ SP400, from Sun Polymers, Mooresville, Indiana.

Compositions may comprise 30 phr or more, for example, 40 phr or more, or 50 phr or more, or 60 phr or more, of one or more than one of a silicone resin having a glass transition temperature (Tg) of at least 50°C. The compositions should comprise 90 phr or less, for example, 80 phr or less, or 70 phr or less of one or more than one silicone resin. Use of the upper content limit or less of silicone resin, with the proper choice of another resin, will insure the adhesion of any coating, films or article to its substrate.

For forming powder coatings, films or articles, the one or more than one silicone resin of the present invention should be solid at room temperature and preferably have a Tg of 50°C or above, for example, 55°C or above, preferably 60°C or above. When blended with higher Tg silicone resins, silicone resins having a Tg of 35°C or above, for example, 40°C or above, may be used in amounts of up to 50 phr, for example, up to 40 phr, or up to 30 phr. Adequate Tg prevents undue blocking of a coating powder. The tendency of a powder to sinter or block is an important measure of its commercial value. Minor blocking is normal for powders. A tendency to excessively block can make cold storage, shipping, and handling necessary. Badly blocked powder is useless and must be discarded. Blocking is measured by weighing a 1" diameter cylinder of powder 1 inch (2.54 cm) deep with 110 grams at 110°F (43°C.) for 24 hours and evaluating the difficulty of breaking the sample back into usable powder. Further, suitable silicone resins may have a viscosity of between about 500 and about 10,000 cps at 150°C, preferably 2000 to 5000 cps. These viscosity parameters are required for appropriate melt-flow of the molten coating powder at the temperatures at which the coating powder is fused and cured.

Suitable silicone resins in the powder composition of the present invention comprise organic substituents, including monovalent hydrocarbons, alkoxy groups and (alkyl)aryloxy groups, as well as siloxanes or silsesquioxanes substituted with monovalent hydrocarbons, hydroxyl groups, alkoxy groups and (alkyl)aryloxy groups, and may additionally contain hydroxyl groups.

Examples of monovalent hydrocarbons include, but are not limited to, phenyl, methyl, C₂ through C₂₄ alkyl or (alkyl)aryl, and mixtures thereof. Among the silicone resins useful in the present invention are compounds of formula (I):

RₓR_{y}SiO_{(4-x-y)/2} (I)

wherein each of Rₓ and Ry is independently a monovalent hydrocarbon group, another group of formula (I), or OR¹, wherein R¹ is H or an alkyl or an aryl group having 1 to 24 carbon atoms, and wherein each of x and y is a positive number such that 0.8≤(x+y)≤4.0. Exemplary silicone resin compositions may include organo-siloxanes comprising units including dimethyl, diphenyl, methylphenyl, phenylpropyl and their mixtures.

For use in electrical insulation, any organosiloxane resin having a Tg of 50°C or more and a suitable viscosity at 150°C may be used. Organosiloxane resins, such as polydimethylsiloxane, provide electrical insulation at temperatures of at least 340°C, are highly water resistant, and do not support combustion. For added heat stability, silicone resins comprising a mixture of methyl and phenyl groups as monovalent hydrocarbons may be used, e.g. poly(methylphenylsiloxane). Exemplary silicone resins of the present invention may comprise random mixtures of methyl and phenyl groups, dimethyl siloxane and diphenyl siloxane groups, or methylphenyl siloxane groups, wherein the ratio of phenyl to methyl groups is 0.5 to 1.5:1, more preferably 0.7:1 to 1.1:1.

In an embodiment of the present invention, the one or more than one silicone resin of the present invention may self-condense at high end-use temperatures, e.g., above 200°C and, thus, may include silanol functionality (Si--O--H). The total silicone resin component, i.e. all silicones used in a composition, according to the present invention may have a condensable silanol content of 0.25 wt. % or more, for example, 0.5 wt. or more, or 1 wt. % or more, or 1.3 wt. % or more, or 2.5 wt. % or more, or 3 wt. % or more, based on the total weight of the silicone resin. The condensable hydroxyl content of the silicone resin may range as high as 7 wt. %, or as high as 5 wt. %, based on the total weight of the silicone resin. The condensable hydroxyl content should not be too high lest excess water outgasses during curing of the coating powder, resulting in foaming or bubbles and a hazy appearance and unacceptable voids. On the other hand, the lower end of the condensable hydroxyl content range is important because below this level the coating powder may cure too slowly to be suitable for electrical applications.

In an alternative embodiment, the compositions may comprise one or more than one silanol functional silicone resin and one or more than one silicone resin that is free of silanol groups or has less than 0.5 wt. 5 of silanol groups. Silanol functional resins may be present in the amount of 20 phr or more, for example, 30 phr or more, or 40 phr or more, of one or more than one silicone resin having a silanol functionality, mixed with one or more than one poly(organosiloxane) resin not having a silanol functionality, wherein the composition comprises, in total, 40 phr or more, for example 50 phr or more or 65 phr or more of silicone resins and, further wherein the total composition comprises 90 phr or less, for example, 80 phr or less, or 70 phr or less of two or more than two silicone resins.

The silicone resin of the present invention should contain 0.2 wt. % or less of organic solvents, preferably 0.1 wt. % or less. However, most commercial silicone resins contain some residual organic solvent as a consequence of the process of silicone resin synthesis. Such organic solvent tends to be internally trapped within the silicone resin and is generally not removed when the silicone resin is melt blended with other components to form a coating powder composition. Accordingly, it may be necessary to substantially remove such residual organic solvent. This is accomplished by melting the silicone resin and removing solvent from the molten resin, e.g., by sparging with a gas, such as nitrogen, or by vacuum.

An exemplary silicone resin in accordance with the present invention was made by removing solvent from a commercial silicone resin, which process also further polymerized the resin, i.e., Dow Corning 6-2230 silanol functional methylphenyl silicones. In a melt polymerization, residual solvents, absorbed water and water of condensation were removed by nitrogen sparging, followed by cooling the resin and then chilling it to a solid on a flaker. This "flaking" process yields a resin with a Tg high enough to eliminate blocking problems. The resin also exhibited a desirable combination of low outgassing during cure, acceptable viscosity and fast cure speed when catalyzed properly.

Examples of commercially available silanol functional silicone resins useful in the present invention may include "flaked" and mixed flaked and unflaked resins that are made from Wacker Silres® SY-430 phenylsilicone, Wacker Silres® MK (methylsilicone), Wacker Silres® 604 (methylphenylsilicone), and Wacker Silres® 601 phenylsilicone, each from Wacker Silicone Corp. of Adrian, Mich., Dow Corning@ 220 (methylphenyl silicone, Dow Corning@ 6-2230 methylphenylsilicone (silanol containing), Dow Corning@ 249 (methylphenylsilicone), flaked resins made from Dow Corning® MQ resins (silanol containing) and Dow Corning® Z-6018 propylphenyl silicones, each from Dow Corning@ (Midland, Mich.), General Electric SR-355 from General Electric (Waterford, N.Y.); and PDS-9931 from Gelest, Inc., (Tullytown, Pa.), and those resins prepared from organochlorosilanes, such as methyltrichlorosilane, phenyltrichlorosilane and dimethyldichlorosilane by dehalogenation. Unflaked resins have a slightly lower Tg than flaked resins and may be blended with flaked resins. Unflaked resins, such as phenylsilicone, may be used in amounts of 50 phr or less, for example, 40 phr or less, or 30 phr or less. Other suitable silicone resins for use in the invention are discussed in Silicones in Protective Coatings, supra. Preferred resins, which may be used without "flaking" may include Morkote® S-101, from Rohm and Haas Company, Philadelphia, PA.

Compositions may comprise one or more than one suitable filler chosen from wollastonite (calcium metasilicate), wollastonite mixed with barium sulfate, mica, mica mixed with barium sulfate, wollastonite mixed with mica, barium sulfate, calcium phosphate, magnesium phosphate perlite and other porous fillers having a low coefficient of thermal expansion (CTE), alumina; clays, such as layered silicates including phyllosilicates, smectite, hectorite, montmorillonite, and kaolin; Na or Mg metasilicate, Mg silicate, talc, chalk, feldspar, CaCO₃, sintered glass frit, quartz glass powder, glass rods and glass whiskers having an aspect ratio of from 8:1 to 40:1, chopped glass fibres having an aspect ratio of from 8:1 to 40:1, sodium titanate, silicon carbide, silicon nitride, polytitanocarbosilane, phosphate glass frit having a Tg of from 420 to 450°C, MgO, magnesia. Useful commercially available fillers may include Nyad 325 wollastonites, from Nyco Minerals Company, Calgary, Alberta, Canada, barium sulfates, such as 1090P Blanc Fixe, from Polar Minerals, Mt. Vernon, IN or 1075 Barite, from Polar Minerals, Mt. Vernon, IN.

The compositions of the present invention may comprise blends one or more or each of fillers of large and of small sizes. Such compositions can derive the insulative and mechanical properties of larger particles of 3 or more microns average particle size, for example 10 or more microns average particle size, and 75 or less microns, for example 30 or less microns average particle size and, further, may derive the dry fluidity and melt thixotropy of smaller particles. Blends of fillers also afford better filler distribution in a coating.

Small particle size fillers may be chosen from ZnO, TiO₂, crystalline silica, fumed silica, amorphous precipitated silica, Al(OH)₃, zirconia, barium titanate, or mixtures thereof, and may range from 0.01 to 3 microns in average particle size. One or more than one small particle size filler may be included in the amount of 0.5 phr or more, for example, 1.0 phr or more, or 3.0 phr or more, and may be included in amounts of 10 phr or less, for example 7.0 phr or less.

The content of the one or more than one filler may comprise 10 phr or more, or 20 phr or more, or 40 phr or more to improve electrical insulative properties of cured compositions. The content of the one or more than one filler may comprise 200 phr or less, or 150 phr or less, or 100 phr or less, or 80 phr or less to insure that the resulting composition may be melt flowable, film-forming and/or moldable.

Colorants useful in the powders of the present invention may include organic pigments, TiO₂ metal flakes, and heat resistant pigments, such as the various iron oxide pigments and mixed metal oxide pigments. The amount of colorant may range up to 20 phr, for example, from 0.1 to 15 phr, or from 0.5 to 10 phr. The amount of TiO₂ used can range as high as 60 phr.

Flow control agents can be present in the powder compositions of the present invention in amounts of up to about 1.5% by weight, and preferably from about 0.5% by weight to about 1.5% by weight, based on the total composition solids. Composition having about 0% by weight to less than 0.2% by weight of flow control agent are also quite useful, as are compositions with less than about 0.15% by weight, less than 0.10% by weight, and less than 0.05% by weight of flow control agent. Useful flow control agents may include acrylics, silicon containing compounds and fluorine-based polymers. Examples of commercially available flow control agents include Resiflow P-67® acrylic oligomer and Clearflow Z-340® from Estron Chemical, Inc. (Calvert City, Ky.); Modaflow® 2000 acrylic copolymer from Monsanto (St. Louis, Mo.); Modarez® MNP silica/silicate mixture and Modarez® 23-173-60 silicone acrylate on silica, from Synthron, Inc. (Morgantown, N.C.); and BYK® Powder Flow 3 polyacrylate/polysiloxane and BYK® 361 acrylate copolymer, from BYK Chemie (Wallingford, Conn.). Said agents enhance the compositions melt-flow characteristics and help eliminate surface defects.

Other useful ingredients include degassing agents, such as benzoin, e.g. from DSM Resins, Inc., Elmwood Park, NJ, in the amount of 0.01 to 1 weight %, based on the weight of the composition.

Powder compositions may be made by flaking silicone resin, if necessary, hand mixing all of the ingredients, for example, by batching and shaking, followed by melt extrusion, cooling and grinding to form a powder of a desired particle size. Composition particle sizes may range, for example, from 15 to 150 microns in average particle size, such as from 20 to 80 microns in average particle size. Accordingly, such compositions may thus be formed by first bag blending and mixing all ingredients thoroughly, e.g. for 2 to 10 minutes, or for 5 minutes, followed by melt extrusion in a single or a twin screw extruder, such as those made by Buss, Prism, Baker Perkins, or Werner Pfleiderer. The melt extrusion temperature may vary depending on the melting point of the resins, but generally ranges from 55°C to 100°C, for example, from 70°C to 90°C. Extrudates may be cooled, for example between two water cooled rolls to form a sheet, and then ground using a Brinkman grinder or an air classifying mill or jet mill, and screened through a 50 to 450 mesh screen. Scalping at 100 mesh may be used to remove coarse particles. The amount of material retained on a 325 mesh may be from 30 to 70 wt. %.

To make a coating according to the present invention, powder is applied in a conventional manner, e.g., electrostatically, to a substrate. The substrate is heated prior to application, at the time of application and/or subsequently so that the coating particles form a continuous film. For example, the powder compositions provided by the present invention may be applied in one or more than one layer, and up to ten layers, on a substrate using electrostatic spray, triboelectric spray, magnetic brush, hot flocking or fluidized bed methods, for example using an ITW Gema or Nordson spray gun. The coated substrate may then be heated to cure the applied powder compositions so that the substrate reaches a temperature in a range from 270°F (133°C) to 550°F (290°C), and preferably from 340°F (171 °C) to 425°F (222°C), and more preferably from 355°F (180°C) to 400°F (208°C). Any coating layer in a multiple layer coating may be heated for from 1 to 10 minutes. The first layer of a multiple layer coating or a single layer coating may be heated for from 5 to 60 minutes to provide a corrosion barrier. Final curing of a multiple layer coating may comprise heating it for from 5 to 60 minutes.

A seven layer coating may be made as follows:

An unheated copper stator bar may be coated with the first layer of powder using an electrostatic spray gun and may be heated for 25 min in a convection oven at a temperature of 220°C /428°F, wherein the bar reaches a surface temperature of 200°C /392°F, as measured by a thermocouple. The coated bar is removed from the oven and a second layer is then coated thereon, with intermediate heating or curing for 5 min in the 220°C oven. Each of the subsequent five layers may be coated and heated in the same way as the second layer, followed by a final cure for 60 min at 220°C.

Total coating thicknesses may be 25 µm or more, for example, 50 µm or more, or 100 µm or more, or 254 µm (10 mils) or more, or 400 µm or more, and may comprise one or more than one layers, so long as the coating is thick enough to provide insulation with 15% or less electric loss (tan δ ≤ 0.15), or for example, 10% or less electric loss (tan δ ≤ 0.1) at 200°C under a load of 1 kV/mm of coating thickness at 50Hz. Coating thicknesses may range up to 3 mm (3000 µm), for example, up to 2.0 mm, or up to 1.0 mm, or up to 0.75 mm, or up to 0.5 mm. Thinner coatings of up to 400 um in thickness may be formed in a single layer, whereas thicker coatings may comprise multilayer coatings of layers successively formed from the same powder or different powders, one atop of another, for example, having two or more, three or more, or four or more layers, and may comprise up to 10 layers, for example, up to 8 layers.

Suitable substrates that may be coated with the powders of the present invention may include aluminum, aluminized steel, cold rolled and hot rolled steel, copper, iron, galvanized zinc, plastics and rubbers, organic/inorganic hybrid resins, polyorganosiloxanes, glasses and ceramics.

Uses for electrically insulative powder coatings include, for example, the insulation of the individual conductors of conductor bundles, known as transposed bars, in rotating electrical machines, such as generators, turbines and small electric motors; the insulation of rotors, stator bars and busbars in generators, turbines, and small electric motors; coatings for fuses, e.g. resettable fuses, capacitors, e.g. ceramic capacitors, switchgear and transformers, and parts of electric motors; and coatings for parts of rotating electrical machines other than rotors, stators and conductor bundles. For example, in gas compression systems, e.g. gas turbines, the centrifugal compressors, turbochargers, turbines, compressors and their respective blades, e.g. which may be cast and machined or may be cast and unmachined, may be coated for heat resistance and efficient air flow as the silicone resin coating adds lubricity to the surfaces.

In use, the loads on electrically insulative powder coatings may range as high as an electric field strength of 5 V/mm of coating thickness. For example, the voltage between the individual conductors of transposed bars is only a few volts. In addition, the load to which insulation is exposed in busbars may be weak because there is no counterelectrode on the surface of the insulation in busbars. Therefore, the powder coating insulation itself, given a layer thickness of subconductor insulation of 50-200 µm, may only be subject to weak electrical loads, i.e. with electric fields of E<1 kV/mm.

Powder coatings according to the present invention and films formed therefrom may be used as binders for sealing resins in sealing semiconductors, and may be used to seal or insulative the surfaces of semiconductors, photo-semiconductors, IC's (integrated circuits), LSI's, transistors, thyristors, diodes, materials for electric laminates, capacitors, e.g. ceramic capacitors, resistors, printed circuit boards and printed wiring boards. Further, the powder may be used and as a binder for glass cloth for heat resistant thin film electroinsulation materials and laminates. Still further, the powders may be filled into the pores in a ceramic coating on a semiconductor device, such as an induction plasma melt sprayed ceramic powder coating comprising porcelain, silica, MgO, magnesia, polysilazane or silicon carbide ceramic, or may be filled into the pores on a casing cover for motors and used as a heat resistant and electrically insulative substance. Yet still further, the coatings may be used as impregnating agents for transformer coils. Yet even still further, the powders may be used to make heat resistant coatings and films on stacks, mufflers, manifolds, boilers, ovens, furnaces, steam liners, heat exchangers, barbecue equipment and cooking utensils.

The compositions of the present invention may also find uses other than as coatings, such as thermoformable resins for injection and transfer moulding, casting, potting and electronic encapsulation, and immersion coating and dipping.

### EXAMPLES

In all of the following Examples, the powder ingredients were first bag blended and mixed thoroughly, followed by melt extrusion in a twin screw extruder set at 400 RPM with an ambient rear zone temperature and a front zone temperature of 82.2°C, then followed by cooling. The cooled extrudates were then ground using a Brinkman grinder and then screened through a 60 mesh screen.

To coat Q panel substrates, the powder was applied using an electrostatic spray gun to a thickness of 4 to 6 mils (101.6 to 152µm) on 3" X 5" (76.2mm X 127mm) steel Q-panels and was cured at 400°F (204.4°C) for 15 minutes and the cured coating was heat aged at 180°C for 8 hours to stabilize the coating. To coat copper substrates with multiple layers for microscopic examination of coating appearance and for short-term heat aging, a seven layer method and a ten layer method were used. In the ten layer method, the copper was preheated in a 220°C oven for 45 minutes, and each layer of powder was electrostatically applied to a thickness of from 100 to 150 µm, followed by intermediate curing for 7 minutes at 220°C. After the tenth layer is applied, the multiple layer coating is subject to final curing for 60 minutes at 220°C to give a 1.0 to 1.5 mm thick coating. In the seven layer method, the copper was coated at room temperature and the first coating layer was heated in a 220°C oven for 25 minutes, each successive layer of powder was electrostatically applied to a thickness of from 100 to 150 µm followed by intermediate curing for 5 minutes at 220°C. After the seventh layer is applied, the multiple layer coating is subject to final curing for 60 minutes at 220°C to give the seven layer coating.

Tan delta (tan δ) is a measure of electrical loss under electrical load. Tan δ corresponds to that portion of electrical energy which is converted to heat energy in use, thus heating the insulation up. Electrodes with a diameter of 80mm were applied to each of the coated Q-panels, which were then submerged in oil for aging under an electrical load of 1 kV/mm of coating thickness at 50Hz, and with the coating at a temperature room temperature, 150°C, and 200°C for a period long enough to make the measurement, from 2 to 5 minutes. The tan δ will be highest at 200°C, and that figure is reported in Table 3.

Microstructures of powder coatings were determined by examination of scanning electron micrograph (sem) images taken from cross sections of the multi-layer coatings on a copper substrate, including the measurement of bubbles and voids in the coatings. Coating appearance observations are reported in Table 3.

Short term heat aging testing was performed on multi-layer coatings on a copper substrate under the conditions indicated in Table 3.

Appearance was judged by visual inspection of multi-layered coatings. Texture appearances are acceptable, especially in multi-layer coatings which tend be less smooth than single layer coatings.

**TABLE 1**

| INGREDIENT | EXAMPLE | | | | | |
|---|---|---|---|---|---|---|
| | **1** | **2** | **3** | **4** | **5** | **6** |
| Flaked methylphenyl silicone resin (< 0.1 wt% organic solvent) | **65 phr** | **60 phr** | | | | **40 phr** |
| Phenyl silicone resin | **15 phr** | | **40 phr** | **40 phr** | **20 phr** | |
| Methylphenyl silicone | | **30 phr** | | | | |
| Glycidyl functional acrylate resin (*EEW from 290-310) | **10 phr** | **10 phr** | | **30 phr** | | |
| Cresol novolac resin | **10 phr** | | | | | |
| Bisphenol A epoxy resin (EEW 935 to 1176) | | | **30 phr** | **30 phr** | **40 phr** | |
| Bisphenol A epoxy resin (EEW 500 to 550) | | | | | | **30 phr** |
| Carboxyl functional acrylic copolymer (Acid No. 75, Tg 57°C) | | | **30 phr** | | **40 phr** | **30 phr** |
| 10 wt % Zinc Neodecanoate (masterbatch: wollastonite carrier) 3.5 phr | | **2.5 phr** | | | | |
| Acrylic oligomer flow control agent 1.5 phr | | **1.5 phr** | **1.5 phr** | **1.5 phr** | **1.5 phr** | **1.5 phr** |
| Benzoin (degassing agent) 0.8 phr | | **0.8 phr** | **0.7 phr** | **0.7 phr** | **0.7 phr** | **0.7 phr** |
| Barium sulfate (1.5 - 2.5 µm avg. part size) | | | **15 phr** | **15 phr** | **15 phr** | **15 phr** |
| Wollastonite (325 mesh size) | **75 phr** | **60 phr** | | | | |
| Carbon black pigment | **20 phr** | **15 phr** | **7 phr** | **7 phr** | **7 phr** | **7 phr** |
| Mica (325 mesh size) | **20 phr** | **30 phr** | **50 phr** | **50 phr** | **50 phr** | **50 phr** |
| Fumed silica dry flow aid (wt.% based on total weight of powder) | **0.3%** | **0.2%** | **0.2%** | **0.2%** | **0.2%** | **0.2%** |

| | | | | | | |
|---|---|---|---|---|---|---|
| * EEW= epoxy equivalent wt. | | | | | | |

**TABLE 2**

| **INGREDIENT** | **EXAMPLE** | | | | | |
|---|---|---|---|---|---|---|
| | 7 | 8 | 9 | 10 | 11 | 12 |
| Flaked methylphenyl silicone resin (<0.1 wt% organic solvent) | | | | 90 phr | | 90 phr |
| Methylphenyl silicone resin | 40 phr | 40 phr | 40 phr | | 40 phr | |
| Carboxyl functional acrylic copolymer (Acid No. 75, Tg 57°C) | 30 phr | 45 phr | 15 phr | | 30 phr | |
| Glycidyl functional acrylate resin (*EEW from 290-310) | | | | 10 phr | | 10 phr |
| Bisphenol A epoxy resin (EEW 500 to 550) | 30 phr | | | | 30 phr | |
| Bisphenol A epoxy resin (EEW 935 to 1176) | | 15 phr | 45 phr | | | |
| 10 wt % Zinc Neodecanoate (masterbatch: wollastonite carrier) | | | | 5 phr | | 5 phr |
| Acrylic oligomer flow control agent | 1.5 phr | 1.5 phr | 1.5 phr | 1.5 phr | 1.5 phr | 1.5 phr |
| Benzoin (degassing agent) | 0.7 phr | 0.7 phr | 0.7 phr | 0.8 phr | 0.7 phr | 0.8 phr |
| Cobalt chromite green spinel | | | | 0.68 phr | | |
| Red iron oxide (average particle size 0.25 microns) | | | | 0.027 phr | | |
| Buff rutile chrome, antimony, titanium oxide | | | | 0.19 phr | | |
| Rutile titanium dioxide | | | | 60 phr | | |
| Barium sulfate (1.5 - 2.5 µm avg. part size) | 15 phr | 15 phr | 15 phr | | 15 phr | 15 phr |
| Wollastonite (325 mesh size) | | | | 55 phr | | |
| Carbon black pigment | 7 phr | 7 phr | 7 phr | | 7 phr | 7 phr |
| Bisphenol A epoxy resin modified with butadiene acrylonitrile elastomer, EEW 1500-2050 | | | | | 5 phr | |
| Mica (325 mesh size) | 50 phr | 50 phr | 50 phr | | 50 phr | 50 phr |
| Light colored mica (8-10 µm part. size) | | | | 8 phr | | |
| Fumed silica dry flow aid (% = wt. based on total weight of powder) | 0.2% | 0.2% | 0.2% | 0.3% | 0.2% | 0.2% |

| | | | | | | |
|---|---|---|---|---|---|---|
| * EEW= epoxy equivalent wt. | | | | | | |

**TABLE 3 -**

| **RESULTS** | | | | |
|---|---|---|---|---|
| Example | Coating Appearance | Tan δ at 200°C (%) | Microstructure | Short Term Ageing (@200°C, for 840h) |
| 1 | ⁺⁺Structured surface Gasing | 0.09 (9) | -- | -- |
| 2 black | ⁺⁺Structured surface Gasing | 0.11 (11) | -- | -- |
| 3 black | **Structured surface Gasing, macroscopic bubbles | 0.23 (23) | **Dense structure No voids >15µm | **Cracks,peeling off at cooling down |
| 4 black | **Structured surface | 0.5 (50) | **Porous structure 10µm bubbles/voids | **No cracks |
| 5 black | **Structured surface Gasing, macroscopic bubbles | 0.98 (98) | **Dense structure No voids >15µm | **No cracks |
| **6 black (1.1 mm thick) | **Smooth surface macroscopic bubbles in thicker layers | 0.32 (32) | **Dense structure No voids >25µm | -- |
| ⁺⁺7 | ⁺⁺Smooth surface Gasing, macro- scopic bubbles | 0.17 (17) | ⁺⁺Dense structure No voids >25µm (in bubble-free areas) | - |
| ⁺⁺8 black | ⁺⁺Smooth surface Gasing, macroscopic bubbles | 0.56 (56) | ⁺⁺100-300µm bubbles | -- |
| ⁺⁺9 black | ⁺⁺Structured surface Gasing, macroscopic bubbles | 0.37 (37) | ⁺⁺50-100µm voids | -- |
| ⁺⁺10 | ⁺⁺Structured surface | 0.15 (15) | ⁺⁺Cracks around filler | -- |
| **11 black (1.5mm thick) | **Smooth surface Gasing, macroscopic bubbles | 0.20 (20) | **50-150µm bubbles | -- |
| **12 black (1.0 mm thick) | **Structured surface Gasing, macroscopic bubbles, poor adhesion | 0.13 (13) | **50-150µm bubbles Pinholes, cracks | -- |

| | | | | |
|---|---|---|---|---|
| **Ten layers; | | | | |
| ⁺⁺ Seven layers. | | | | |

As can be seen from the results of Examples 1 and 2, the tan δ of a powder coating may be lowered through use of silicone resin components, such as those containing methyl phenyl silicone, having a silanol content of 0.25 wt.% or higher, whereas use of a silicone resin component comprising only a low silanol content resin, such phenyl silicone in Examples 3, 4 and 5, can provide a smooth coating lacking a sufficiently low tan δ. Further, as can be seen from, the results of Examples 6 and 7, acceptable coating film quality may be obtained by using bisphenol A epoxy resin and a carboxyl functional acrylic copolymer where the silicone component has a silanol content of 0.25 wt.% or higher. Still further, as can be seen from, the result of Example 10, use of wollastonite improves crack resistance in powder coatings and coating adhesion to a substrate, as compared to the use of mica filler in Example 12.

## Claims

1. A powder composition comprising:
from 20 to 90 phr of one or more than one of a silicone resin having a glass transition temperature (Tg) of at least 40°C;
from 10 to 80 phr of one or more than one resin chosen from carboxyl functional polyester mixed with aromatic epoxy resin, carboxyl functional acrylic resin mixed with aromatic epoxy resin, carboxyl functional polyester mixed with novolac resin, carboxyl functional acrylic resin mixed with novolac resin, glycidyl functional acrylic resin mixed with novolac resin, and glycidyl functional acrylic resin; and,
from 10 to 200 phr of one or more than one filler chosen from wollastonite, wollastonite mixed with barium sulfate, mica, mica mixed with barium sulfate, wollastonite mixed with mica, barium sulfate, alumina, clay, sodium metasilicate, magnesium metasilicate, talc, chalk, perlite, CaCO₃, sintered glass frit, quartz glass powder, glass whiskers having an aspect ratio of from 8:1 to 40:1, chopped glass fibres having an aspect ratio of from 8:1 to 40:1, silicon carbide, silicon nitride, polytitanocarbosilane, phosphate glass frit having a Tg of from 420 to 450°C, or mixtures thereof.

2. A powder composition as claimed in claim 1, further comprising:
from 0.5 to 10 phr of one or more than one fine particle size filler chosen from ZnO, TiO₂, crystalline silica, amorphous precipitated silica, Al(OH)₃, zirconia, barium titanate, or mixtures thereof.

3. A powder composition as claimed in claim 1, wherein said one or more than one silicone resin comprises methylphenyl silicone or a mixture of methylphenyl silicone and phenyl silicone.

4. A powder composition as claimed in claim 1, wherein said one or more than one silicone resin is flaked.

5. A powder composition as claimed in claim 1, wherein said composition comprises 40 to 80 phr of one or more said than one silicone resin.

6. A powder composition as claimed in claim 1, wherein said one or more than one silicone resin contains from 0.25 wt. % to 7.0 wt. % of silanol groups, based on the total weight of silicone resin.

7. A powder composition as claimed in claim 1, wherein said filler comprises wollastonite mixed with barium sulfate, mica mixed with barium sulfate, wollastonite mixed with mica, wollastonite, mica, or talc.

8. A powder coating, film, molding electrical potting compound or electrical encapsulation compound made from a composition as claimed in any one of claims 1-7.

9. A powder coating or film as claimed in claim 8 which comprises from one to ten coating layers, wherein the total coating thickness ranges from 25 µm to 3 mm.

10. A silicone containing powder coating or film in one or more layers which exhibits a tan δ of less than 0.15 at 200°C under an electrical load of 1 kV/mm of total coating thickness at 50 Hz.
